# EUROPÄISCHE PATENTSCHRIFT

(11) **EP 1 612 031 B1**
(45) Veröffentlichungstag und Bekanntmachung des Hinweises auf die Patenterteilung: **15.11.2006**
(21) Anmeldenummer: 04015540.0
(22) Anmeldetag: 01.07.2004
(51) Int. Cl.: B29C 49/42, B29C 49/04

(54) **Verfahren zur Herstellung von Hohlkörpern aus thermoplastischem Kunststoff sowie Vorrichtung zur Durchführung des Verfahrens**
Method and apparatus for manufacturing hollow plastic articles
Procédé et appareil pour la fabrication d'articles creux en plastique

(43) Veröffentlichungstag der Anmeldung: 04.01.2006
(73) Patentinhaber: Kautex Maschinenbau GmbH, 53229 Bonn (DE)
(72) Erfinder: Kummer, Wolfgang, 53721 Siegburg (DE)
(74) Vertreter: Kierdorf, Theodor

(56) Entgegenhaltungen:
- PATENT ABSTRACTS OF JAPAN Bd. 010, Nr. 326 (M-532), 6. November 1986 (1986-11-06) & JP 61 134224 A (KYORAKU CO LTD), 21. Juni 1986 (1986-06-21)
- PATENT ABSTRACTS OF JAPAN Bd. 014, Nr. 440 (M-1028), 20. September 1990 (1990-09-20) & JP 2 175225 A (KYORAKU CO LTD), 6. Juli 1990 (1990-07-06)
- PATENT ABSTRACTS OF JAPAN Bd. 015, Nr. 381 (M-1162), 26. September 1991 (1991-09-26) & JP 03 153335 A (TOSOH CORP), 1. Juli 1991 (1991-07-01)
- PATENT ABSTRACTS OF JAPAN Bd. 006, Nr. 150 (M-148), 10. August 1982 (1982-08-10) & JP 57 069020 A (IDEMITSU PETROCHEM CO LTD), 27. April 1982 (1982-04-27)

## Beschreibung

Die Erfindung betrifft ein Verfahren zur Herstellung von Hohlkörpern aus thermoplastischem Kunststoff durch Extrusionsblasformen, bei dem ein schlauchförmiger Vorformling aus plastifiziertem Material zwischen Teilen einer sich um diesen schließenden Blasform mittels innerem Überdruck aufgeweitet wird, wobei der Vorformling vor dem Schließen der Formhälften quer zur Extrusionsrichtung und in einer Teilungsebene der Blasform so gespreizt wird, dass er sich über die seitlichen Ränder des Formnestes der Blasform hinaus erstreckt.

Solche Verfahren sind beispielsweise aus der JP 61 134 224 A und aus der DE-AS 1 178 580 bekannt. Bei diesen Verfahren ist vorgesehen, den Vorformling unmittelbar vor dem Schließen der Blasform mittels Spreizdornen so auseinander zu ziehen, dass dieser sich etwa über die gesamte Breite des von der Blasform gebildeten Formnestes erstreckt, bevor sich die Formhälften schließen. Diese Verfahren dienen in erster Linie zur Herstellung von Hohlkörpern flachen Querschnitts, bei welchen die Breite des Hohlkörpers ein Vielfaches dessen Tiefe beträgt.

Wenn bei der Herstellung solcher Erzeugnisse ein üblicher schlauchförmiger Vorformling mit kreisförmigem Querschnitt extrudiert wird, tritt bei der Aufweitung des Vorformlings in der Blasform eine äußerst ungünstige Verteilung des Materials in der Wand des Fertigerzeugnisses ein, da der Schlauch in einer Richtung während des Aufweit- bzw. Blasvorgangs sehr stark gedehnt werden muss, wohingegen er in einer senkrecht dazu stehenden Richtung kaum eine Dehnung erfährt.

Um so erzeugte Unregelmäßigkeiten der Wandstärke des Fertigerzeugnisses zu vermindern, wird in der DE-AS 1 178 580 vorgeschlagen, den Schlauch vor dem Schließen der Formhälften in der Teilungsebene der Blasform zu spreizen. Dadurch wird erreicht, dass die für flache Erzeugnisse an sich ungeeignete Ausgangsgestalt des schlauchförmigen Zwischenerzeugnisses vor dem Schließen der Blasform entsprechend geändert wird. Bei diesem Verfahren wird der Schlauch zunächst über Spreizdorne extrudiert, die sich in etwa über die gesamte Höhe der Blasform erstrecken. Ein Auseinanderfahren der Spreizdorne quer zur Extrusionsrichtung in der Teilungsebene der Blasform bewirkt ein Flachlegen des Vorformlings in die gewünschte Gestalt. Sodann werden die Formhälften des Werkzeugs geschlossen. Vor dem Entformen des fertigen Bauteils müssen die Spreizdorne aus diesem wieder entfernt werden. Hierzu wird in der DE-AS 1 178 580 vorgeschlagen, die Spreizdorne in Extrusionsrichtung aus dem Butzen des Bauteils herauszuziehen.

Dies ist insbesondere bei der Herstellung großer Bauteile mit einer Länge der Vorformlinge von 1 m und mehr schwierig, da entsprechender Platz für den zu realisierenden Hub der Spreizdorne in Extrusionsrichtung vorgesehen sein muss, andererseits besteht die Gefahr, dass das Herausfahren der Dorne nach dem Schließen der Blasform so viel Zeit in Anspruch nimmt, dass das Material um die Dorne herum ganz oder teilweise aushärtet, was das Herausziehen der Dorne erheblich erschwert. Aus diesem Grund ist das in der DE-AS 1 178 580 bekannte Verfahren nicht in die Praxis umgesetzt worden.

Als Alternative zu diesem Verfahren ist man dazu übergegangen, den Vorformling vor dem Schließen der Blasform durch Vorblasen aufzuweiten.

Bei der Herstellung von großen Blasformteilen ist diese Vorgehensweise allerdings insoweit problematisch als dass es verhältnismäßig lange dauert, bis die Luft aus dem Vorformling entwichen ist, bevor die Blasform geschlossen wird. Je größer das Blasteil ist, desto größer wird die hierdurch bedingte Zykluszeit, was aus Kostengründen nicht wünschenswert und teilweise auch technisch nicht mehr praktikabel ist.

Der Erfindung liegt daher die Aufgabe zugrunde, ein Verfahren der eingangs genannten Art so weiterzubilden, dass dieses wirtschaftlich umsetzbar ist.

Der Erfindung liegt weiterhin die Aufgabe zugrunde, eine Vorrichtung zur Durchführung des Verfahrens gemäß der Erfindung bereitzustellen.

Die Aufgabe wird zunächst dadurch gelöst, dass der nach dem Schließen der Blasform entstehende Butzen vor der Entnahme des Artikels aus der Blasform an den sich in Extrusionsrichtung erstreckenden Rändern beiderseits der Blasform jeweils der Länge nach aufgetrennt wird.

Hierdurch ist es möglich, die Spreizdorne unmittelbar nach dem Schließen der Formhälften durch ein Auseinanderfahren quer zur Extrusionsrichtung oder durch eine zusätzliche Hubbewegung in Extrusionsrichtung aus dem Butzen herauszufahren. Es wird dabei vor allen Dingen der Gefahr entgegengetreten, dass das sich abkühlende und erhärtende sowie dabei schrumpfende thermoplastische Material die Spreizdorne so umschließt, dass ein Entfernen der Spreizdorne aus dem Artikel nur noch unter Zuhilfenahme zusätzlichen Werkzeugs manuell möglich ist.

Zweckmäßigerweise erfolgt das Auftrennen der Ränder des Butzens mittels Schneideinrichtungen, so lange das den Butzen bildende Material noch plastisch ist.

Bevorzugt erfolgt das Auftrennen der Ränder des Butzens entgegen der Extrusionsrichtung, das heißt von unten nach oben.

Der Vorformling wird zweckmäßigerweise über zwei stabförmige Spreizdorne extrudiert, die vor dem Schließen der Blasform in der Teilungsebene der Blasform quer zur Extrusionsrichtung auseinander gefahren werden. Es ist für den Fachmann selbstverständlich, dass eine Kühlung der Spreizdorne vorgesehen sein kann.

Das Auftrennen der Ränder des Butzens kann durch ein weiteres Auseinanderfahren der Spreizdorne nach dem Schließen der Blasform unterstützt werden. Dabei ist es nicht erforderlich, dass die Spreizdorne eine Hubbewegung vollziehen, die etwa ihrer Länge entspricht. Vielmehr kann nur eine geringfügige Hubbewegung der Spreizdorne in Extrusionsrichtung vorgesehen sein.

Die der Erfindung zugrunde liegende Aufgabe wird weiterhin gelöst durch eine Vorrichtung zur Durchführung des Verfahrens mit einer wenigstens zweiteiligen Blasform und mit wenigstens zwei stabförmigen Spreizdornen, deren Länge etwa der Höhe des von der Blasform gebildeten Formnestes entspricht, wobei die Spreizdorne in der Teilungsebene der Blasform quer zur Extrusionsrichtung relativ zueinander verfahrbar sind. Die Vorrichtung zeichnet sich dadurch aus, dass jedem Spreizdorn wenigstens eine Schneideinrichtung zugeordnet ist, die zwecks Auftrennung der Ränder des Butzens in und/oder gegen die Extrusionsrichtung verfahrbar ist. Als Schneideinrichtung können beispielsweise Messer an der Blasform angeordnet sein, die nach Schließen der Formhälften jeweils einen vertikalen Trennschnitt durch den beiderseitig der Blasform überstehenden Butzen führen.

Alternativ hierzu kann vorgesehen sein, dass die Schneideinrichtungen jeweils an dem betreffenden Spreizdorn längs verschieblich angeordnet ist, und zwar zweckmäßigerweise in Form jeweils eines Messers.

Bei einer bevorzugten Variante der Erfindung ist das Messer an einem Messerträger befestigt, der verschiebbar im Inneren des Spreizdorns geführt ist, wobei das Messer einen sich längs des Spreizdorns erstreckenden Führungsschlitz durchsetzt. Zweckmäßigerweise ist das Messer beheizbar.

Wenigstens einer der Spreizdorne kann aus der Teilungsebene der Blasform herausbewegbar oder herausschwenkbar sein, um eine ungestörte Entnahme des Artikels aus der Blasform zu gewährleisten.

Um das Herausfahren der Spreizdorne aus dem Butzen des Artikels weiterhin zu erleichtern, kann vorgesehen sein, dass die Spreizdorne heb- und senkbar sind, wobei der Hub nur einen geringen Teil der Länge der Spreizdorne beträgt. Dies trägt dem Umstand Rechnung, die beim Schnitt zweckmäßigerweise von unten nach oben geführten Messer nicht ganz bis in das von der Einspannung abliegenden Ende der Spreizdorne führen zu wollen.

Die Erfindung wird nachstehend anhand eines in den Zeichnungen dargestellten Ausführungsbeispiels erläutert.

Es zeigen:
- Fig. 1: ein schematische Ansicht einer Vorrichtung zum Extrusionsblasen in Richtung auf das Formnest mit davor befindlichen Spreizdornen,
- Fig. 2: eine Seitenansicht auf die in Figur 1 dargestellte Vorrichtung,
- Fig. 3: einen Schnitt entlang der Linien III-III in Figur 1, der den über die zusammengefahrenen Spreizdorne extrudierten Vorformling zeigt,
- Fig. 4: eine der Figur 3 entsprechende Ansicht mit auseinander gefahrenen Spreizdornen,
- Fig. 5-7: den Figuren 3 und 4 entsprechende Ansichten, bei denen verschiedene Bewegungszyklen der Blasform und der Spreizdorne nacheinander dargestellt sind,
- Fig. 8: eine Ansicht in Richtung des Pfeils VIII in Figur 5,
- Fig. 9: eine Ansicht in Richtung des Pfeils IX in Figur 6 und
- Fig. 10: eine Schnittansicht in Richtung der Pfeile X-X in Figur 8.

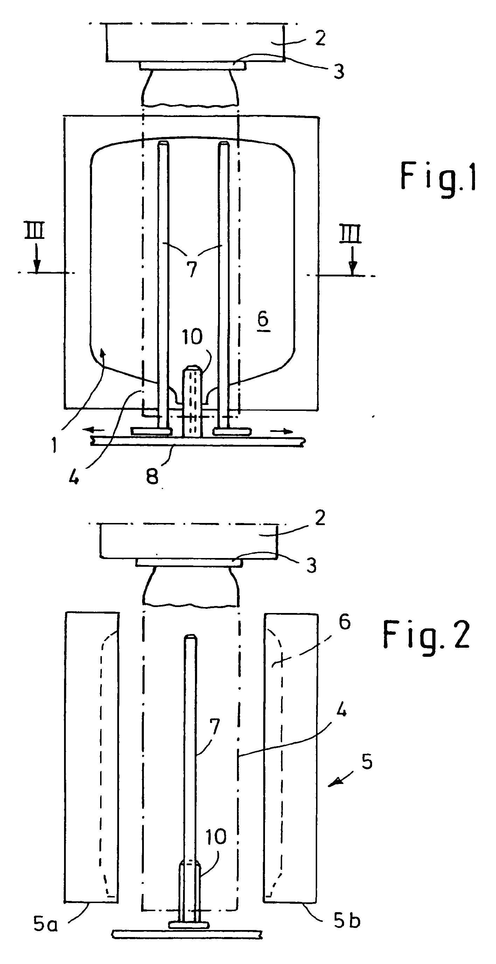

Die Vorrichtung zum Extrusionsblasformen von Artikeln 1 aus Kunststoff ist in den Figuren 1 und 2 schematisch dargestellt. Bei dem Artikel 1 handelt es sich bei dem dargestellten Ausführungsbeispiel um ein verhältnismäßig großes Bauteil aus thermoplastischem Kunststoff, dessen Breite ein mehrfaches seiner Tiefe beträgt. Mit 2 ist ein Extrusionskopf bezeichnet, aus dessen Düse 3 zunächst ein schlauchförmiger Vorformling 4 aus thermoplastischem Kunststoff hängend zwischen die geöffneten Hälften 5a, 5b einer zweiteiligen Blasform 5 extrudiert wird. Die beiden Hälften 5a, 5b der Blasform 5 bilden in bekannter Art und Weise ein Formnest 6, dessen Innenkontur der Außenkontur des fertigen Artikels 1 entspricht.

Wie der in den Figuren 1 und 2 schematisch dargestellten Abfolge zu entnehmen ist, wird der Vorformling 4 über zwei zwischen den Hälften 5a, 5b der Blasform 5 angeordnete Spreizdorne 7 extrudiert. Die Spreizdorne 7 entsprechen in ihrer Länge etwa der Höhe des Formnestes 6 und sind verfahrbar bzw. verschiebbar auf einem unterhalb der Blasform 5 vorgesehenen Sockel 8 angeordnet. In der in Figur 1 gezeigten Stellung der Spreizdorne 7 sind diese mit Abstand voneinander in der Teilungsebene der Blasform so angeordnet, dass der Abstand der Spreizdorne 7 zueinander kleiner ist als der Innendurchmesser des schlauchförmigen Vorformlings 4, so dass der Vorformling 4 ohne Probleme über die Spreizdorne 7 extrudiert werden kann.

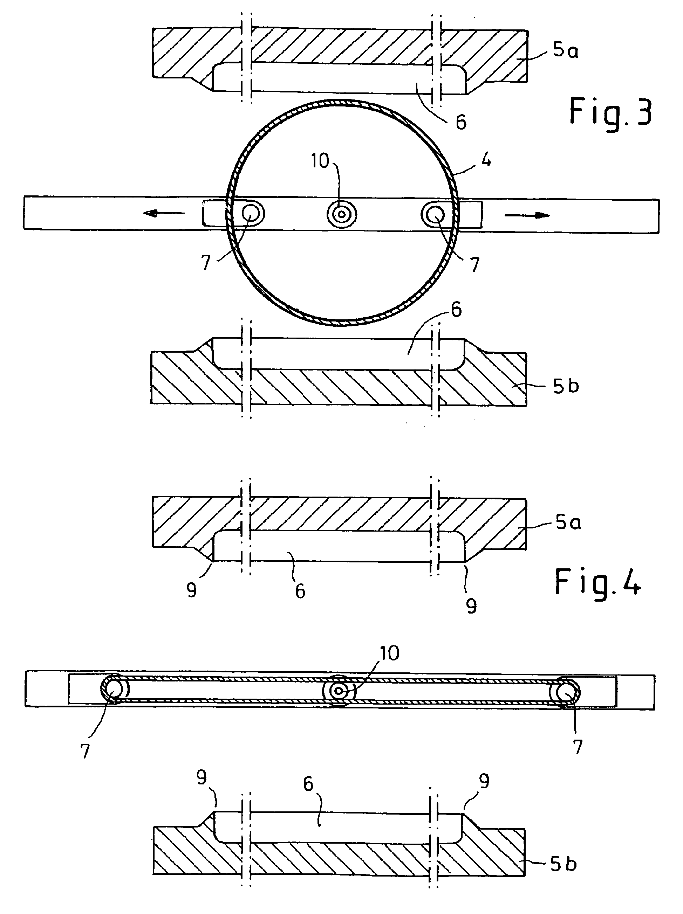

Nachdem der Vorformling 4 auf seine vollständige Länge extrudiert wurde, wie dies in Figur 1 strichpunktiert dargestellt ist, werden die Spreizdorne 7 in der Teilungsebene der Blasform 5 quer zur Extrusionsrichtung des Vorformlings 4 auseinander gefahren, und zwar von der in Figur 3 dargestellten Lage in die in Figur 4 dargestellte Lage. Bei dem dargestellten Ausführungsbeispiel werden die Spreizdorne 7 so weit auseinander gefahren, dass sie sich außerhalb des Schließbereichs der Blasform 5 befinden, so dass der Vorformling 4 über das Formnest 6 und über die seitlichen Begrenzungen der Blasform 5 flachgelegt wird. So bildet der Vorformling 4 zwei zueinander parallele Bänder aus. Bei dem beschriebenen Ausführungsbeispiel ist vorgesehen, dass die Spreizdorne 7 lediglich ein Flachlegen des Vorformlings 4 in die in Figur 4 gezeigte Lage bewirken, d. h. dass ein Strecken bzw. Recken des Materials quer zur Extrusionsrichtung nicht stattfindet. Selbstverständlich kann aber auch ein Strecken bzw. Recken des Materials quer zur Extrusionsrichtung vorgesehen sein.

Die Spreizdorne 7 halten den Vorformling 4 in der in Figur 4 gezeigten flachgelegten Lage, wobei die Spreizdorne 7 sich in dieser Lage neben der Blasform befinden. Die Hälften 5a, 5b der Blasform 5 schließen sich nun um den Vorformling 4 und schließen diesen zwischen sich ein. Die Quetschkanten 9 der Blasform verschweißen und quetschen den Vorformling randseitig gegeneinander und gegen den mit 10 bezeichneten Blasdorn ab. Über den Blasdorn 10 wird ein gasförmiges Blasmedium unter Druck in den Vorformling eingebracht, so dass dieser gegen die Wandung des Formnestes 6 aufgeweitet wird.

Sodann wird der Vorformling 4 von dem Extrusionskopf 2 abgetrennt. Parallel hierzu werden die Ränder 12 des seitlich an der Blasform 5 hervorstehenden Butzens 13 mit einer Schneideinrichtung 14 an jedem Spreizdorn 7 aufgetrennt. Jedem der Spreizdorne 7 ist eine Schneideinrichtung 14 zugeordnet, die jeweils ein Messer 15 umfasst, welches innerhalb des betreffenden Spreizdorns 7 von einem Messerträger 16 gehalten wird. Der Messerträger 16 ist längsverschieblich innerhalb des Spreizdorns 7 geführt, wobei das Messer 15 einen Führungsschlitz 17 des Spreizdorns 7 durchsetzt. Der Führungsschlitz erstreckt sich in Längsrichtung des Spreizdorns etwa von dessen eingespanntem Ende 18 bis kurz unterhalb dessen abliegendem Ende 19.

Der Messerträger 16 kann innerhalb des Spreizdorns über ein geeignetes Zugelement, beispielsweise über eine Kette oder auch pneumatisch oder auch beispielsweise über einen Spindel-Muttertrieb, axial verschiebbar sein.

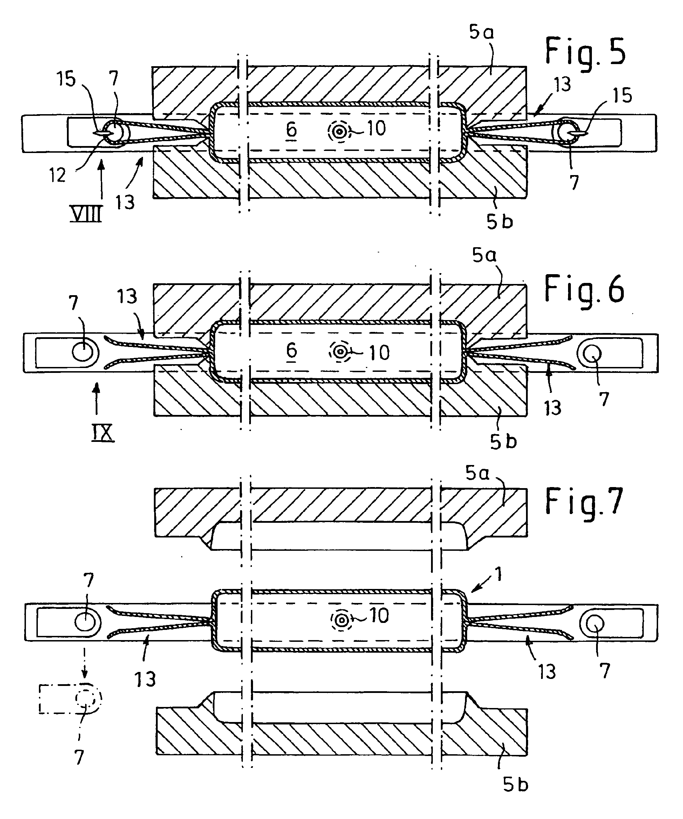

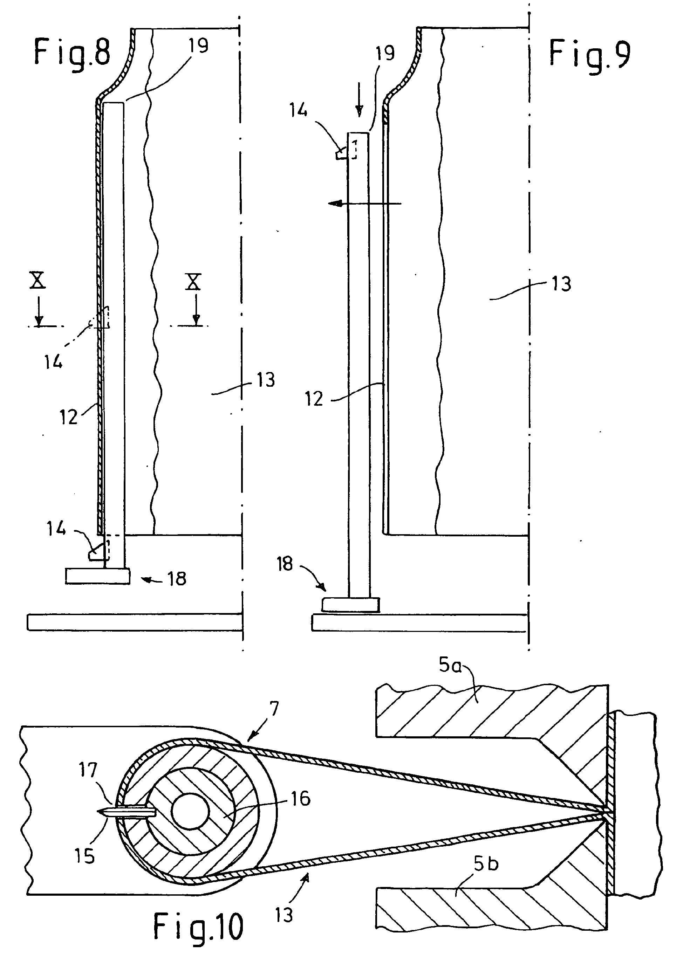

Wie dies aus der Abfolge der Figuren 8 und 9 ersichtlich ist, wird zum Auftrennen des Butzens 13 das Messer 15 in dem Führungsschlitz 17 des Spreizdorns von unten nach oben, d. h. entgegen der Extrusionsrichtung, geführt, wobei der aus dem Führungsschlitz 17 herausragende Teil des Messers 15 den Butzen 13 der Länge nach auftrennt. Da der von dem Messer 15 erzeugte Schnitt nicht die vollständige seitliche Kantenlänge des Butzens 13 schneidet, werden die Spreizdorne nach Durchführung des Schnitts um einen geringfügigen Betrag in Extrusionsrichtung abgesenkt. Sodann werden die Spreizdorne, wie dies in den Figuren 6 und 7 dargestellt ist, weiter in der Teilungsebene der Blasform 5 auseinandergefahren. Dabei unterstützt die Verfahrbewegung der Spreizdorne 7 das Aufgehen des Butzens 13 an der Trennnaht und das Lösen der Spreizdorne 7 von dem Vorformling 4.

Um das sichere Entnehmen des Artikels 1 aus der Blasform 5 zu gewährleisten, ist es dann weiterhin günstig, wenn, wie dies in Figur 7 dargestellt ist, wenigstens der Spreizdorn 7 aus der Teilungsebene der Blasform 5 herausbewegt oder herausgeschwenkt wird, auf dessen Seite der fertig geblasene Artikel 1 entnommen wird.

Es ist selbstverständlich auch möglich, das Auftrennen des Butzens 13 mittels Schneidmessern oder Heißdrähten zu bewerkstelligen, die an der Blasform angeordnet sind. Weiterhin ist es möglich, das Aufschneiden mittels einer separaten Trennvorrichtung zu bewerkstelligen, die nicht werkzeuggebunden ist und die nicht mit den Spreizdornen verbunden ist. In diesen Fällen wäre eine Auftrennung des Butzens 13 in dem Bereich zwischen den Quetschkanten 9 der Blasform 5 und der Längsachse der Spreizdorne 7 günstig.

Die Spreizdorne 7 müssen nicht notwendigerweise vollständig aus dem Schließbereich der Hälften 5a, 5b der Blasform 5 herausgefahren werden, zur Aufnahme dieser können vielmehr auch entsprechende Ausnehmungen in den Hälften 5a, 5b der Blasform 5 außerhalb des Formnestes 6 vorgesehen sein, wie dies beispielsweise in der DE 1 178 580 beschrieben ist.

### Bezugszeichenliste

- 1: Artikel
- 2: Extrusionskopf
- 3: Düse
- 4: Vorformling
- 5a, 5b: Hälften der Blasform
- 5: Blasform
- 6: Formnest
- 7: Spreizdorne
- 8: Sockel
- 9: Quetschkanten
- 10: Blasdorn
- 12: Ränder
- 13: Butzen
- 14: Schneideinrichtung
- 15: Messer
- 16: Messerträger
- 17: Führungsschlitz
- 18: eingespanntes Ende des Spreizdorns
- 19: abliegendes Ende des Spreizdorns

## Patentansprüche

1. Verfahren zur Herstellung von Hohlkörpern aus thermoplastischem Kunststoff durch Extrusionsblasformen, bei dem ein schlauchförmiger Vorformling (4) aus plastifiziertem Material zwischen Teilen einer sich um diesen schließenden Blasform (5) mittels innerem Überdruck aufgeweitet wird, wobei der Vorformling vor dem Schließen der Formhälften (5a, 5b) quer zur Extrusionsrichtung und in einer Teilungsebene der Blasform so flachgelegt wird, dass er sich über die seitlichen Ränder des Formnestes der Blasform hinaus erstreckt, **dadurch gekennzeichnet, dass** der nach dem Schließen der Blasform (5) entstehende Butzen (13) vor der Entnahme des Artikels (1) aus der Blasform an den sich in Extrusionsrichtung erstreckenden Rändern beiderseitig der Blasform jeweils der Länge nach aufgetrennt wird.

2. Verfahren nach Anspruch 1, **dadurch gekennzeichnet, dass** das Auftrennen mittels Schneideinrichtungen erfolgt, solange das den Butzen (13) bildende Material noch plastisch ist.

3. Verfahren nach einem der Ansprüche 1 oder 2, **dadurch gekennzeichnet, dass** das Auftrennen entgegen der Extrusionsrichtung erfolgt.

4. Verfahren nach einem der Ansprüche 1 bis 3, **dadurch gekennzeichnet, dass** der Vorformling (4) über zwei vorzugsweise stabförmige Spreizdorne (7) extrudiert wird, die vor dem Schließen der Blasform (5) in der Trennungsebene der Blasform quer zur Extrusionsrichtung auseinander gefahren werden.

5. Verfahren nach Anspruch 4, **dadurch gekennzeichnet, dass** das Auftrennen der Ränder des Butzens (13) durch ein weiteres Auseinanderfahren der Spreizdorne (7) nach dem Schließen der Blasform (5) unterstützt wird.

6. Vorrichtung zur Durchführung des Verfahrens nach einem der Ansprüche 1 bis 5, mit einer wenigstens zweiteiligen Blasform und mit wenigstens zwei vorzugsweise stabförmigen Spreizdornen, deren Länge etwa der Höhe des von der Blasform gebildeten Formnestes entspricht, die in der Teilungsebene der Blasform quer zur Extrusionsrichtung relativ zueinander verfahrbar sind, **dadurch gekennzeichnet, dass** jedem Spreizdorn (7) wenigstens eine Schneideinrichtung zugeordnet ist, die zwecks Auftrennung der Ränder des Butzens (13) in und/oder gegen die Extrusionsrichtung verfahrbar ist.

7. Vorrichtung nach Anspruch 6, **dadurch gekennzeichnet, dass** die Länge der Spreizdorne (7) wenigstens der Höhe des Formnestes entspricht.

8. Vorrichtung nach Anspruch 6 oder 7, **dadurch gekennzeichnet, dass** als Schneideinrichtung wenigstens ein Messer (15) vorgesehen ist, das an dem betreffenden Spreizdorn (7) längsverschiebbar angeordnet ist.

9. Vorrichtung nach Anspruch 7, **dadurch gekennzeichnet, dass** das Messer (15) an einem Messerträger (16) befestigt ist, der verschiebbar im Inneren des Spreizdorns (7) geführt ist, wobei das Messer (15) einen sich längs des Spreizdorns (7) erstreckenden Führungsschlitz (17) durchsetzt.

10. Vorrichtung nach einem der Ansprüche 8 oder 9, **dadurch gekennzeichnet, dass** das Messer (15) beheizbar ist.

11. Vorrichtung nach einem der Ansprüche 6 bis 10, **dadurch gekennzeichnet, dass** wenigstens einer der Spreizdorne (7) aus der Teilungsebene der Blasform (5) herausbewegbar oder herausschwenkbar ist.

12. Vorrichtung nach einem der Ansprüche 6 bis 11, **dadurch gekennzeichnet, dass** die Spreizdorne (7) heb- und senkbar sind, wobei der Hub nur einen Teil der Länge der Spreizdorne (7) beträgt.

## Claims

1. A process for producing hollow bodies of thermoplastic material by extrusion blow moulding, wherein a tubular preform (4) of plasticised material is expanded between parts of a blow moulding mould (5) enclosing the preform, by means of an increased internal pressure, wherein the preform is laid flat prior to closure of the mould halves (5a, 5b) transversely with respect to the extrusion direction and in a separation plane of the blow moulding mould, in such a way that the preform extends beyond the lateral edges of the mould cavity of the blow moulding mould, **characterised in that**, prior to removal of the article (1) from the blow moulding mould, the bulge portion (13) produced after closure of the blow moulding mould (5) is cut open along its length at each side of the blow moulding mould at the respective edges extending in the extrusion direction.

2. A process according to claim 1 **characterised in that** the operation of cutting open the bulge portion is effected by means of cutting devices as long as the material forming the bulge portion (13) is still plastic.

3. A process according to one of claims 1 and 2 **characterised in that** the operation of cutting open the bulge portion takes place in opposite relationship to the extrusion direction.

4. A process according to one of claims 1 to 3 **characterised in that** the preform (4) is extruded over two preferably bar-shaped spreading mandrels (7) which are moved away from each other prior to closure of the blow moulding mould (5) in the separation plane of the blow moulding mould transversely with respect to the extrusion direction.

5. A process according to claim 4 **characterised in that** the operation of cutting open the edges of the bulge portion (13) is assisted by further moving the spreading mandrels (7) away from each other after closure of the blow moulding mould (5).

6. Apparatus for carrying out the process according to one of claims 1 to 5 comprising an at least two-part blow moulding mould and at least two preferably bar-shaped spreading mandrels whose length approximately corresponds to the height of the mould cavity formed by the blow moulding mould, the spreading mandrels being displaceable relative to each other in the separation plane of the blow moulding mould transversely with respect to the extrusion direction, **characterised in that** associated with each spreading mandrel (7) is at least one cutting device which is displaceable in and/or in opposite relationship to the extrusion direction for the purposes of cutting open the edges of the bulge portion (13).

7. Apparatus according to claim 6 **characterised in that** the length of the spreading mandrels (7) corresponds at least to the height of the mould cavity.

8. Apparatus according to claim 6 or claim 7 **characterised in that** provided as the cutting device is at least one blade (15) which is arranged longitudinally displaceably on the spreading mandrel (7) in question.

9. Apparatus according to claim 7 **characterised in that** the blade (15) is fixed to a blade carrier (16) which is guided displaceably in the interior of the spreading mandrel (7), wherein the blade (15) passes through a guide slot (17) extending along the spreading mandrel (7).

10. Apparatus according to one of claims 8 and 9 **characterised in that** the blade (15) is heatable.

11. Apparatus according to one of claims 7 to 10 **characterised in that** at least one of the spreading mandrels (7) is movable or pivotable out of the separation plane of the blow moulding mould (5).

12. Apparatus according to one of claims 6 to 11 **characterised in that** the spreading mandrels (7) can be raised and lowered, wherein the stroke movement is only a part of the length of the spreading mandrels (7).

## Revendications

1. Procédé pour fabriquer des corps creux en matière thermoplastique, par extrusion soufflage, au niveau duquel une préforme tubulaire (4) en matériau plastifié est élargie entre des parties d'un moule de soufflage (5) se fermant autour de celle-ci au moyen d'une surpression intérieure, sachant que la préforme est posée à plat, avant la fermeture des demi-moules (5a, 5b), perpendiculairement au sens d'extrusion et dans un plan de joint du moule de soufflage, de sorte qu'elle s'étend au-delà des bords latéraux de l'empreinte du moule de soufflage, **caractérisé en ce que** la matière en excès (13) apparaissant après la fermeture du moule de soufflage (5) est séparée, à chaque fois, longitudinalement, avant la prise de l'article (1) du moule de soufflage au niveau des bords s'étendant dans le sens d'extrusion des deux côtés du moule de soufflage.

2. Procédé selon la revendication 1, **caractérisé en ce que** la séparation s'effectue à l'aide de dispositifs de coupe, tant que le matériau formant la matière en excès (13) est encore facile à déformer.

3. Procédé selon l'une des revendications 1 ou 2, **caractérisé en ce que** la séparation s'effectue dans le sens inverse d'extrusion.

4. Procédé selon l'une quelconque des revendications 1 à 3, **caractérisé en ce que** la préforme (4) est extrudée par le biais de deux mandrins extensibles (7) de préférence en forme de barre qui s'écartent, perpendiculairement au sens d'extrusion, avant la fermeture du moule de soufflage (5) dans le plan de séparation du moule de soufflage.

5. Procédé selon la revendication 4, **caractérisé en ce que** les deux mandrins extensibles (7) s'éloignant à nouveau, les bords de la matière en excès (13) se séparent après la fermeture du moule de soufflage (5).

6. Dispositif pour réaliser le procédé selon l'une quelconque des revendications 1 à 5, avec un moule de soufflage au moins en deux parties et avec au moins deux mandrins extensibles, de préférence en forme de barre, dont la longueur correspond à peu près à la hauteur de l'empreinte formée par le moule de soufflage et qui peuvent être déplacés l'un par rapport à l'autre perpendiculairement au sens d'extrusion dans le plan de joint du moule de soufflage, **caractérisé en ce qu'**au moins un dispositif de coupe, pouvant être déplacé en vue de séparer les bords de la matière en excès (13) dans le sens d'extrusion et/ou en sens inverse, est associé à chaque mandrin extensible (7).

7. Dispositif selon la revendication 6, **caractérisé en ce que** la longueur des mandrins extensibles (7) correspond au moins à la hauteur de l'empreinte.

8. Dispositif selon la revendication 6 ou 7, **caractérisé en ce qu'**il est prévu, en tant que dispositif de coupe, au moins un couteau (15) qui est disposé, mobile longitudinalement, au niveau du mandrin extensible (7) concerné.

9. Dispositif selon la revendication 7, **caractérisé en ce que** le couteau (15) est fixé au niveau d'un porte-couteaux (16), mobile à l'intérieur du mandrin extensible (7), sachant que le couteau (15) traverse une fente de guidage (17) s'étendant le long du mandrin extensible (7).

10. Dispositif selon l'une des revendications 8 ou 9, **caractérisé en ce que** le couteau (15) peut être chauffé.

11. Dispositif selon l'une quelconque des revendications 6 à 10, **caractérisé en ce qu'**au moins un des mandrins extensibles (7) peut être sorti ou extrait du plan de joint du moule de soufflage (5).

12. Dispositif selon l'une quelconque des revendications 6 à 11, **caractérisé en ce que** les mandrins extensibles (7) peuvent être levés et baissés, sachant que la course ne représente qu'une partie de la longueur du mandrin extensible (7).
